# EUROPEAN PATENT SPECIFICATION

(11) **EP 0 297 801 B1**
(45) Date of publication and mention of the grant of the patent: **18.11.1993**
(21) Application number: 88305814.1
(22) Date of filing: 27.06.1988
(51) Int. Cl.: B32B 27/20, B63B 5/24

(54) **Hull of a water-borne craft and process for its production**
Körper für ein Wasserfahrzeug und Verfahren zu dessen Herstellung
Coque pour un engin flottant et procédé d'obtention

(30) Priority: 30.06.1987 CN 87209793
(43) Date of publication of application: 04.01.1989
(73) Proprietor: Chen, Shijie, Zhuhai Gangdong (CN)
(72) Inventor: Chen, Shijie, Zhuhai Gangdong (CN)
(74) Representative: Ackroyd, Robert

(56) References cited:
- DE-A- 2 411 628
- US-A- 3 176 055
- DATABASE WPI, no. 80-52 472, Derwent Publications, Ltd., London, GB

## Description

The present invention relates to hulls of water-borne craft and to processes of making them.

Materials are currently employed for the hulls of water-borne craft with properties such as low weight, high corrosion resistance and high impact resistance. Some traditional vessels are still made of lumber, steel, cement or glass-fibre reinforced plastics. US-A-3150386 for example disclosed a portable watercraft made of foam plastics and reinforced by a light inner armature, which confers rigidity to the foam plastics and prevents breakage of the same. US-A-2743465 disclosed a ship body comprising an exterior and an interior layer of plastics over wooden planks. Also, US-A-3176055 described a ship hull, wherein a layer of plastics foam was sandwiched in between an inner and an outer plastics layer in order to reduce the inherent weight of the ship hull.

These conventional hulls have a corrosion resistance improved to some extent, with reduced inherent hull weight and increased impact resistance, but they have a poor bulk property and are not suitable to be produced in large sizes. In addition their manufacture is somewhat complex.

DE-A-2411628 discloses a process for manufacturing facade-plates, particularly for curtain facades.

A main object of the invention is to provide a hull of a plastics material which results in improved bulk properties, increased toughness and increased impact resistance and which will enable larger craft to be produced in such materials, for examples craft up to 15 metres in length.

According to the present invention there is provided a hull of a water-borne craft the hull having a wall structure comprising a three-layer sandwich structure of plastics material, characterised in that the inner and outer layers of plastics material each include additive material and filler material, the middle layer of plastics material includes additive material and reinforcing material, the weight of filler material in each of the inner and outer layers is from 10% to 30% of the total weight of the respective layer, and the weight of reinforcing material in the middle layer is from 10% to 50% of the total weight of the middle layer.

The material of such a hull is suitable for forming larger hulls and has excellent toughness and impact resistance. The resultant hull also has excellent bulk properties.

According to a further aspect of the invention there is provided a process for producing a hull of a water-borne craft, the hull having a wall structure comprising a three-layer sandwich structure, characterised by:
placing plastics material including filler material and additive material into a metal container-type die to form a first, outer layer of the structure, the weight of the filler material being from 10% to 30% of the total weight of the outer layer;
driving the die on a swing frame so as to have an inclined movement relative to the stationary horizontal orientation of the die;
heating the die to a temperature of 200 to 400 °C;
placing plastics material including additive material and reinforcing material into the die to form a second, middle layer of the wall structure, the weight of reinforcing material being from 10% to 50% of the total weight of the middle layer;
driving the die to rotate on the swing frame so as to have an inclined movement relative to the stationary horizontal orientation of the die;
heating the die to a temperature of 200 to 400°C;
placing plastics material including filler material and additive material into the die to form a third, inner layer of the wall structure, the weight of the filler material being from 10% to 30% of the total weight of the inner layer;
driving the die to rotate on the swing frame so as to have an inclined movement relative to the stationary horizontal orientation of the die;
heating the die to a temperature of 200 to 400°C; and
demoulding the wall structure at a temperature below 40°C.

The use of rotating moulding technology solves the problems of poor plastics conformability and poor bulk property of the resultant hull, and also reduces the production cost.

An embodiment of the invention will now be described in detail by way of example and by reference to the drawings, in which:
Figure 1A is a schematic perspective view of a hull of a water-borne craft made from material according to the invention;

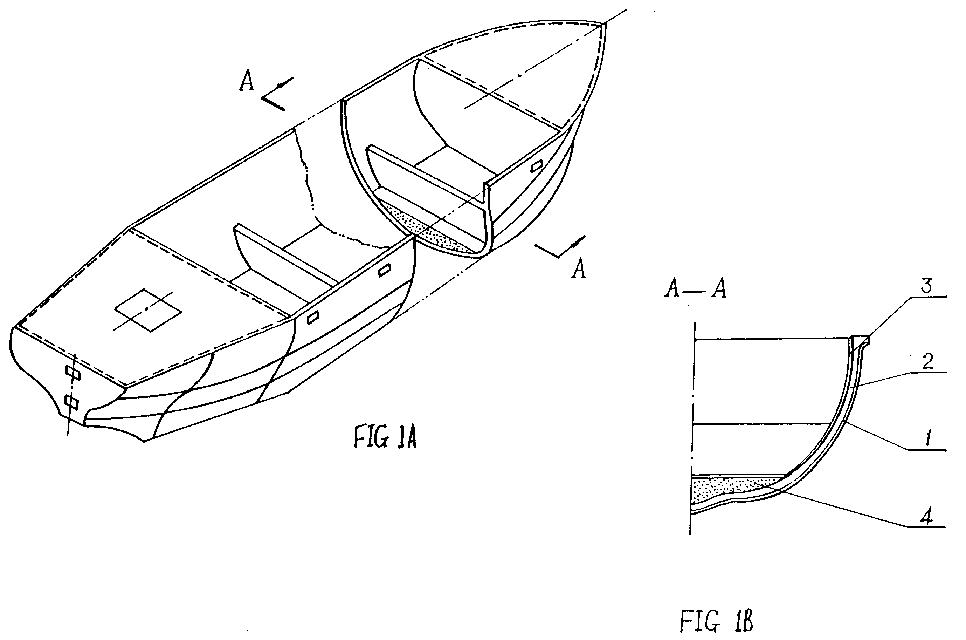

Figure 1B is a part-sectional view taken along A-A of Figure 1A; and
Figure 2 is a sectional view of a rotary modelling machine used in the process of producing the hull of Figures 1A and 1B.

The boat hull has a three-layer sandwich structure, wherein 1 denotes an outer layer of the hull, 2 a middle layer of the hull, 3 an inner layer, with a plastics foam layer 4 in the bottom of the hull.

Polyethylene (PE) is used as the basic material of the outer layer 1, in which additive and filler are incorporated so as to physically improve the material. Suitable additives enhance the durability of the plastics material, for example common ageing resistants and ultraviolet radiation resistants.

The filler is a mixture of the following components: silicon dioxide, ferric sulphate, carbon black, titanium dioxide, zinc oxide, calcium carbonate, molybdenum sulphide, and aluminium oxide. The weight of the filler obtained by mixing the above-mentioned components is equal to 10-30% of the weight of the outer layer of the hull.

Polyethylene (PE) is also used as the basic material of the middle layer 2 of said hull, with a selection from the above-mentioned additives, and also reinforcing material(s), for example glass fibre, asbestos fibre, mineral cotton fibre and rock cotton fibre, carbon fibre or other short fibres, metal filaments, metal network or other metal structural elements. The total weight of said reinforcing material(s) is equal to 10-50% of that of the said hull's middle layer. This middle layer is the reinforcing layer and plays an important role in improving the bulk properties of the hull.

The material of the inner layer 3 of the hull is the same as the outer layer thereof e.g. polyethylene as the basic material with additives and fillers, again 10-30% of the weight of the inner layer, incorporated therein, so as to physically modify the plastics material.

Furthermore, a surface garnishing process of said layers may be used to meet the different requirements of many kinds of hulls for producing a satisfactory inner surface. Plastics foam may be filled into the space between the hull bottom and shell plates from stern to stern and into the float cabin in order to reduce the inherent weight of the hull.

The manufacture of the material is now described.

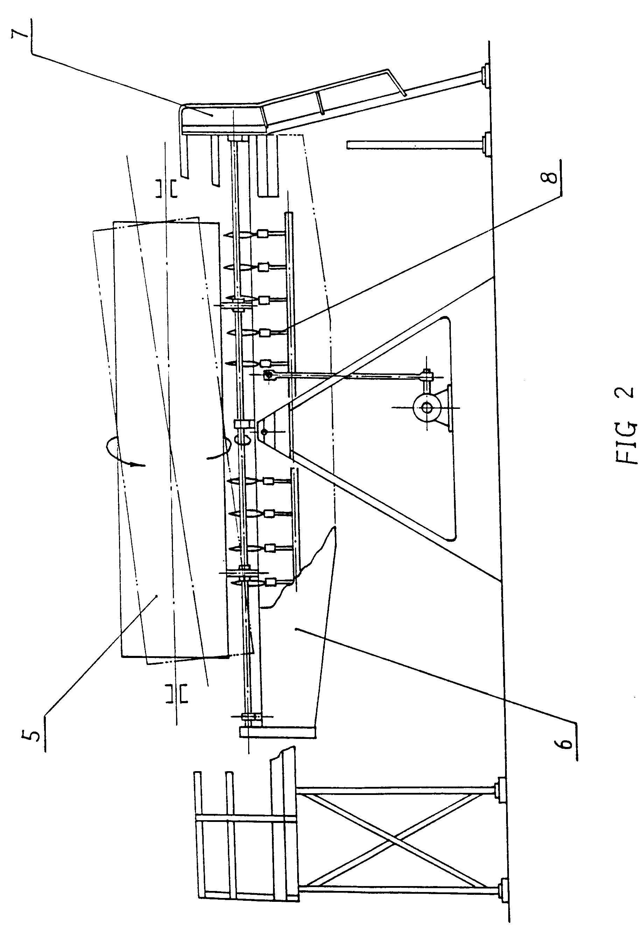

Referring to Figure 2, 5 denotes a container-type die set for the hull; 6 rotating modelling machine, 7 swing frame, and 8 flame jet nozzles. The physically modified plastics materials where polyethylene is used as the basic material are put into a container-type metal-made die set of the hull 5. Said die set 5 is driven to rotate on a swing frame 7 and to have an inclined movement relative to horizontal orientation of said hull by way of a rotating modelling machine 6. In the meantime, said die set is heated up to a temperature in the range 200°C - 400°C by several lines of flame jet nozzles 8, so as to make said physically modified plastics materials evenly spread on the inner wall of said die set for forming the outer layer of the boat hull.

In the same way PE as the basic material mixed homogeneously with additive and reinforcing material (10-50% in weight) is put into the die set, which is rotated and heated to make these materials homogeneously mixed and evenly spread on the exposed surface of the hull's outer layer, so as to form the middle layer, i.e. the reinforcing layer of the boat hull.

Similarly as above mentioned, polyethylene is mixed to incorporate additive and filler (10-30% in weight) therein, so as to obtain a physically modified plastics. Said plastics then is put into the die set which is rotated and heated so that the modified plastics is evenly spread onto the exposed surface of said middle layer to form the inner layer of the boat hull.

The additive(s), filler(s) and reinforcing material(s) in each layer can be selected so as to meet the specific different requirements of performance of the hull.

The boat hull to be obtained according to the process mentioned above is demoulded at a temperature below 40°C. Then plastics foam is filled into the space between the boat bottom and shell plates from stern to stern and also into the float cabin and so on. Other necessary parts and means made of plastics can be added to the hull to form a predominantly or totally plastics craft.

## Claims

1. A hull of a water-borne craft, the hull having a wall structure comprising a three-layer sandwich structure of plastics material, characterised in that the inner (3) and outer (1) layers of plastics material each include additive material and filler material, the middle layer (2) of plastics material includes additive material and reinforcing material, the weight of filler material in each of the inner and outer layers is from 10% to 30% of the total weight of the respective layer, and the weight of reinforcing material in the middle layer is from 10% to 50% of the total weight of the middle layer.

2. A hull according to claim 1, wherein the plastics material is polyethylene.

3. A hull according to claim 1 or 2, wherein the filler material of the inner and outer layers (3, 1) is a mixture including the following components: silicon dioxide, ferric sulphate, carbon black, titanium dioxide, zinc oxide, calcium carbonate, molybdenum sulphide and aluminium oxide.

4. A hull according to any of claims 1 to 3, wherein the reinforcing material of the middle layer (2) comprises glass fibre, asbestos fibre, mineral cotton fibre, rock cotton fibre, metal filaments, metal network and/or metal structural elements.

5. A hull according to any of claims 1 to 4, having a foam plastics layer (4) in the bottom of its interior.

6. A process for producing a hull of a water-borne craft, the hull having a wall structure comprising a three-layer sandwich structure, characterised by:
placing plastics material including filler material and additive material into a metal container-type die (5) to form a first, outer layer (1) of the structure, the weight of the filler material being from 10% to 30% of the total weight of the outer layer;
driving the die (5) on a swing frame (7) so as to have an inclined movement relative to the stationary horizontal orientation of the die;
heating the die to a temperature of 200 to 400 °C;
placing plastics material including additive material and reinforcing material into the die to form a second, middle layer (2) of the wall structure, the weight of reinforcing material being from 10% to 50% of the total weight of the middle layer;
driving the die (5) to rotate on the swing frame (7) so as to have an inclined movement relative to the stationary horizontal orientation of the die;
heating the die to a temperature of 200 to 400°C;
placing plastics material including filler material and additive material into the die to form a third, inner layer (3) of the wall structure, the weight of the filler material being from 10% to 30% of the total weight of the inner layer;
driving the die (5) to rotate on the swing frame (7) so as to have an inclined movement relative to the stationary horizontal orientation of the die;
heating the die to a temperature of 200 to 400°C; and
demoulding the wall structure at a temperature below 40°C.

## Patentansprüche

1. Rumpf eines Wasserfahrzeuges, mit einem eine dreilagige Sandwichkonstruktion aus einem Kunststoffmaterial umfassenden Wandaufbau, dadurch gekennzeichnet, dass die innere (3) und äussere (1) Lage des KunststoffmaterialS jeweils ein additives Material und ein Füllmaterial enthalten, die mittlere Lage (2) des Kunststoffmaterials ein additives Material und ein Verstärkungsmaterial enthält, das Gewicht des Füllmaterials sowohl der inneren als auch äusseren Lage von 10 % bis 30 % des Gesamtgewichtes der betreffenden Lage beträgt, und das Gewicht des VerstärkungsmaterialS in der mittleren Lage von 10 % bis 50 % des Gesamtgewichtes der mittleren Lage beträgt.

2. Rumpf nach Anspruch 1, wonach das Kunststoffmaterial Polyethylen ist.

3. Rumpf nach Anspruch 1 oder 2, wonach das Füllmaterial der inneren und äusseren Lage (3, 1) eine die folgenden Komponenten enthaltende Mischung ist : Siliciumdioxyd, Eisen (III) Sulfat, Russ, Titandioxyd, Zinkoxyd, Kalziumkarbonat, Molybdänsulfid und Aluminiumoxyd.

4. Rumpf nach einem der Ansprüche 1 bis 3, wonach das Verstärkungsmaterial der mittleren Lage (2) Glasfasern, Asbestfasern, Mineralwollefasern, Steinwollefasern, Metallfäden, metallisches Netzwerk und/oder metallische tragende Elemente umfasst.

5. Rumpf nach einem der Ansprüche 1 bis 4 mit einer Schaumstofflage (4) am Boden der Rumpfinnenseite.

6. Verfahren zum Herstellen eines Rumpfes eines Wasserfahrzeuges, wobei der Rumpf einen eine dreilagige Sandwichkonstruktion umfassenden Wandaufbau hat, gekennzeichnet durch,
Einlegen eines Kunststoffmaterials, welches ein Füllmaterial und ein Additivmaterial enthält, in eine metallische, behälterartige Form (5), um eine erste, äussere Lage (1) des Aufbaues zu bilden, wobei das Gewicht des Füllmaterials zwischen 10 % und 30 % des Gesamtgewichtes der äusseren Lage beträgt;
Betätigen der Form (5) auf einem Schenkrahmen (7) so, dass eine geneigte Bewegung relativ zur stationären, horizontalen Ausrichtung der Form erhalten wird;
Erhitzen der Form auf eine Temperatur von 200 bis 400°C;
Einlegen eines Kunststoffmaterials, das ein Additivmaterial und ein Verstärkungsmaterial enthält, in die Form, um eine zweite mittlere Lage (2) des Wandaufbaues zu bilden, wobei das Gewicht des Verstärkungsmaterials von 10 % bis 50 % des Gesamtgewichtes der mittleren Lage beträgt;
Betätigung der Form (5) durch Drehen auf dem Schwenkrahmen (7) so, dass eine geneigte Bewegung relativ zur stationären, horizontalen Ausrichtung der Form erhalten wird;
Erhitzen der Form auf eine Temperatur von 200 bis 400°C;
Einlegen eines Kunststoffmaterials, das ein Füllmaterial und ein Additivmaterial enthält, in die Form um eine dritte, innere Lage (3) des Wandaufbaues zu bilden, wobei das Gewicht des Füllmaterials von 10 % bis 30 % des Gesamtgewichtes der inneren Lage beträgt;
Betätigen der Form (5) durch Drehen auf dem Schwenkrahmen (7) so, dass eine geneigte Bewegung relativ zur stationären, horizontalen Ausrichtung der Form erhalten wird;
Erhitzen der Form auf eine Temperatur von 200 bis 400°C; und
Entformen des Wandaufbaues bei einer Temperatur unterhalb 40°C.

## Revendications

1. Coque d'embarcation flottante, la coque ayant une structure de paroi comprenant un panneau sandwich à trois couches en matière plastique, caractérisée en ce que les couches interne (3) et externe (1) de matière plastique contiennent chacune une matière d'addition et une matière de charge, la couche intermédiaire (2) de matière plastique contient une matière d'addition et une matière de renforcement, le poids de matière de charge dans chacune des couches interne et externe est de 10% à 30% du poids total de la couche en question, et le poids de matière de renforcement dans la couche intermédiaire est de 10% à 50% du poids total de la couche intermédiaire.

2. Coque selon la revendication 1, dans laquelle la matière plastique est du polyéthylène.

3. Coque selon la revendication 1 ou 2, dans laquelle la matière de charge des couches interne et externe (3, 1) est un mélange contenant les composants suivants; bioxyde de silicium, sulfate ferrique, noir de carbone, bioxyde de titane, oxyde de zinc, carbonate de calcium, sulfure de molybdène et oxyde d'aluminium.

4. Coque selon l'une quelconque des revendications 1 a 3, dans laquelle la matière de renforcement de la couche intermédiaire (2) comprend les fibres de carbone, les fibres d'amiante, les fibres minérales, les fibres de coton de roche, les filaments métalliques, les treillis métalliques et/ou les éléments structuraux métalliques.

5. Coque selon l'une quelconque des revendications 1 à 4, comportant une couche de mousse de plastique (4) au fond de son volume intérieur.

6. Procédé de fabrication d'une coque d'embarcation flottante, la coque ayant une structure de paroi comprenant un panneau sandwich à trois couches en matière plastique, caractérisé par les étapes consistant:
à placer une matière plastique, contenant une matière de charge et une matière d'addition, dans un moule (5) du type récipient métallique, de manière à former une première couche externe (1) de la structure, le poids de matière de charge étant de 10% à 30% du poids total de la couche externe;
à entraîner le moule (5) sur un cadre oscillant (7), de façon à lui imprimer un mouvement d'inclinaison par rapport à l'orientation horizontale fixe du moule;
à chauffer le moule à une température de 200 à 400°C;
à placer une matière plastique, contenant une matière d'addition et une matière de renforcement, dans le moule de manière à former une deuxième couche intermédiaire (2) de la structure de paroi, le poids de matière de renforcement étant de 10% à 50% du poids total de la couche intermédiaire;
à entraîner le moule (5) en rotation sur le cadre oscillant (7), de façon à lui imprimer un mouvement d'inclinaison par rapport à l'orientation horizontale fixe du moule:
à chauffer le moule à une température de 200 à 400°C;
à placer une matière plastique, contenant une matière de charge et une matière d'addition, dans le moule de manière à former une troisième couche interne (3) de la structure de paroi, le poids de matière de charge étant de 10% à 30% du poids total de la couche interne;
à entraîner le moule (5) en rotation sur le cadre oscillant (7) de façon à lui imprimer un mouvement d'inclinaison par rapport à l'orientation horizontale fixe du moule;
à chauffer le moule à une température de 200 à 400°C; et
a démouler la structure de paroi à une température inférieure à 40°C.
